# EUROPEAN PATENT APPLICATION

(11) **EP 4 670 580 A1**
(43) Date of publication of application: **31.12.2025**
(21) Application number: 25185791.8
(22) Date of filing: 27.06.2025
(51) Int. Cl.: A47J 31/00, A47J 31/40

(54) **A PORTABLE DEVICE FOR THE CONSUMPTION OF BEVERAGES IN CAPSULES**

(30) Priority: 28.06.2024 IT 202400014950
(71) Applicant: Proni, Nicola, 48014 Castel Bolognese (RA) (IT); Falcone, Luigi, 48014 Castel Bolognese (RA) (IT)
(72) Inventor: Proni, Nicola, 48014 Castel Bolognese (RA) (IT); Falcone, Luigi, 48014 Castel Bolognese (RA) (IT)
(74) Representative: Zoli, Filippo

(57) **Abstract**

The portable device for the consumption of beverages in capsules comprises:
- a shell (3) defining a pocket (7) for containing a capsule (21) containing a liquid to be dispensed;
- a tube (4) communicating with the outside to allow the flow of the liquid, the tube (4) being adapted to pierce the capsule upon its insertion into the pocket (7);
- a heating mechanism (8) for the capsule (21) contained in the pocket (7);
- a battery (12) for powering at least the heating mechanism (8);
- a power button (10) operable for activating the heating mechanism (8) by means of the battery (12).

## Description

The present invention relates to a portable device for the consumption of beverages in capsules.

As is well known, in order to drink a coffee, it is necessary to go to a bar or a restaurant or make use of a dispenser capable of dispensing hot beverages placed in places of attendance.

It can therefore be complicated to be able to drink a hot beverage, such as an espresso coffee, in a location without properly equipped facilities for this purpose.

WO 2020/121021A1 describes a portable device for the consumption of beverages comprising a carrier body configured to house an electronic device, e.g. a smartphone, and provided with a seat for the insertion of a capsule containing a liquid beverage. More specifically, the carrier body has a door which can be opened to allow gaining access to the seat and inserting the capsule, which is provided with a one-way valve adapted to allow air to enter but not the liquid contained in the capsule itself to flow out. The seat housing the capsule is then set in communication with the external environment by means of a duct so that the liquid contained in the capsule may flow out. Such a device is then provided with heating means operable to warm the beverage before use.

The device described by WO 2020/121021A1 has however some drawbacks.

In fact, it does not allow for easy and practical insertion of the capsule into the relevant seat, as it is necessary to open and close the access door which, moreover, can be damaged, making the device unusable.

Moreover, such a device, necessarily requires the use of a capsule provided with an air inlet valve since, in the absence of such a valve, the liquid would not flow to the outside.

Last but not least, the carrier body is configured to receive an electronic device, thus being constrained to carry such an electronic device as well as being of non-negligible weight and size making it of impractical use.

The aim of the present invention is to devise a portable device for the consumption of beverages in capsules which is easy and practical to use. Within this aim, one object of the present invention is to devise a device which allows easy control of the outflow of the liquid beverage.

Still another object is to allow the use of capsules that are easy to make and with an affordable cost.

A further object is to devise a device which allows a plurality of parameters related to the dispensing of the liquid beverage to be controlled.

Not the least object is to devise a capsule that is of simple construction, with an affordable cost and does not require the application of additional valves for its operation.

Other characteristics and advantages of the present invention will become more apparent from the description of a preferred, but not exclusive, embodiment of a portable device for the consumption of beverages in capsules, illustrated by way of an indicative, yet non-limiting example, in the attached tables of drawings in which:

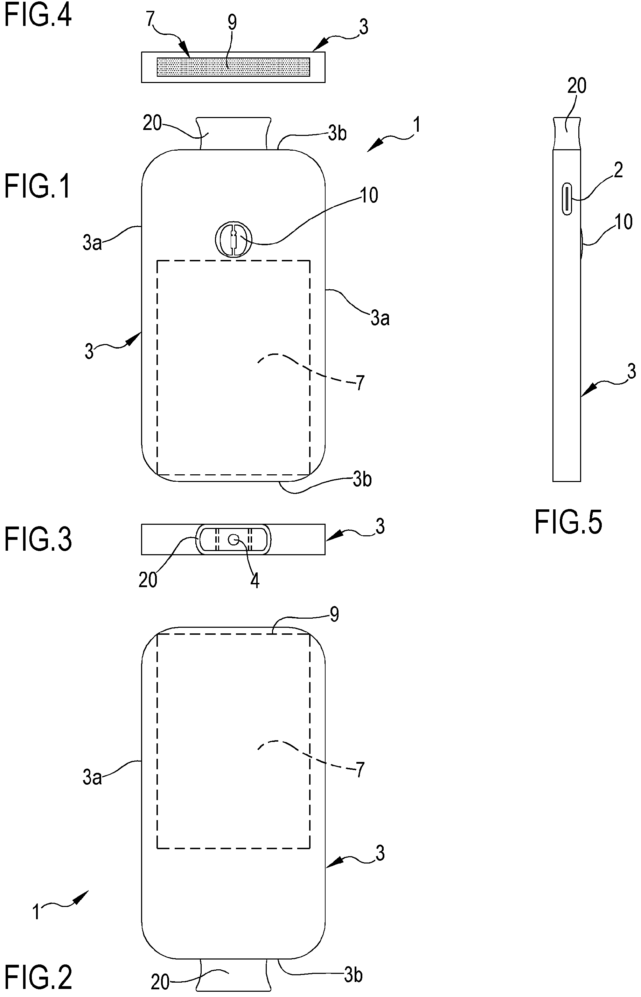

Figure 1 is a front elevation view of a device according to the invention, in a first embodiment;
Figure 2 is a rear elevation view of the device in Figure 1;
Figure 3 is a plan view from above of the device in Figure 1;
Figure 4 is a plan view from below of the device in Figure 1;
Figure 5 is a side elevation view of the device in Figure 1;

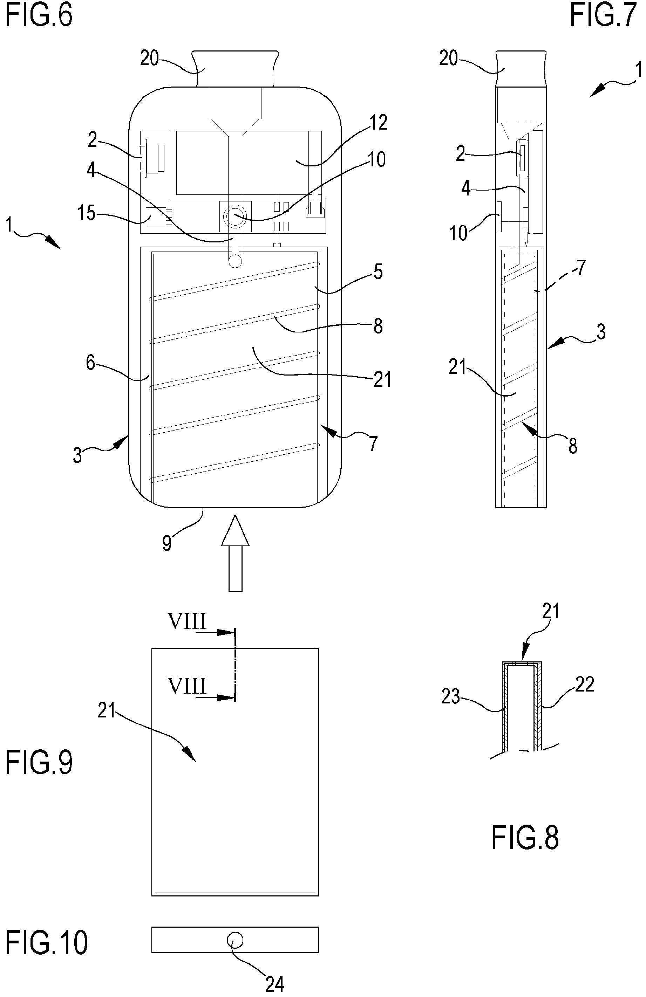

Figure 6 is a cross-sectional view of the device in Figure 1 along a first track plane;
Figure 7 is a cross-sectional view of the device in Figure 1 along a second track plane;
Figure 8 is a partial cross-sectional view of a capsule according to the invention;
Figure 9 is a front elevation view of a capsule according to the invention;
Figure 10 is a plan view from above of the capsule in Figure 9;
Figure 11 is a cross-sectional view of a device according to the invention in a second embodiment;
Figure 12 is a front elevation view of the section in Figure 11.

### Embodiments of the Invention

With particular reference to these figures, reference numeral 1 globally denotes a portable device for the consumption of beverages in capsules.

The device 1 comprises a shell 3, e.g. of the type of a hollow box-shaped body, which defines a pocket 7 for the containment of a capsule 21 containing a liquid to be dispensed. The liquid to be dispensed may be of the type of coffee, herbal tea, tea, various infusions, chocolate, milk, or the like.

Appropriately, the shell 3 is made of polymeric material, although the use of different materials cannot be ruled out.

The device 1 then comprises a tube 4 communicating with the outside to allow the flow of the liquid, where the tube 4 is adapted to pierce the capsule as a result of its insertion into the pocket 7.

Preferably, the tube 4 is made of metal material, e.g. stainless steel.

In a particular embodiment of the device 1, the tube 4 is inserted within a defined space in the shell 3 in a removable manner.

Preferably, the tube 4 has a straight development and is free of bends and/or fittings, so as to minimize pressure drop and facilitate the outflow of the liquid product.

According to the invention, the device 1 comprises a heating mechanism 8 for the capsule 21 contained in the pocket 7, a battery 12 for powering at least the heating mechanism 8 and a power button 10 operable for activating the heating mechanism 8 via the battery 12.

Advantageously, the heating mechanism 8 comprises a thermally conductive material 5 arranged so as to at least partly cover the pocket 7 and electrically connected to the battery 12 in such a way that, as a result of the operation of the power button 10, the resistance offered by the thermally conductive material 5 to the flow of current is changed into thermal energy. More particularly, the thermally conductive material is of the type of a metal foil which bounds the pocket 7 around its perimeter.

The heating mechanism 8 then comprises an insulating material 6 arranged externally to the thermally conductive material 5 so as to prevent heat loss.

In other words, the heating mechanism 8 comprises a coil externally coated with an insulating material 6 and distributed on the surface of the pocket 7 containing the capsule 21 to be heated.

The insulating material 6 is placed between the thermally conductive material 5 and the inner wall which bounds the pocket 7 around its perimeter.

Thus, the thermally conductive material 5 is placed, in use, between the insulating material 6 and the capsule 21 to be heated.

Advantageously, the pocket 7 comprises one opening 9 which is accessible from the outside for the insertion of the capsules 21. The opening 9 is thus devoid of closure elements, thus being always accessible from the outside for easy insertion of the capsule 21.

In the preferred embodiment shown in the figures, the shell 3 is conformed substantially to a parallelepiped shape and the opening 9 has a substantially rectangular cross-section.

Preferably, the device 1 comprises at least one spout 20 connected to the tube 4. More particularly, the spout 20 is arranged on the opposite side from the opening 9 of the capsules 21 within the pocket 7.

In the embodiment shown in the figures, the shell 3 has an elongated conformation, the spout 20 and the opening 9 being arranged where the opposite longitudinal ends of the shell 3 are located.

More particularly, the shell 3 is conformed substantially to a parallelepiped shape and has two major sides 3a and two minor sides 3b, opposite two by two, where the spout 20 and the opening 9 are arranged at the minor sides 3b.

The spout 20 can be associated with the shell 3 in a removable manner. This allows its quick replacement both in case of damage and for hygienic reasons. As visible from the figures, the tube 4 is placed between the spout 20 and the pocket 7.

Preferably, the device 1 comprises at least one motherboard 11 (Pcb) operationally connected to the battery 12 and configured to perform at least one of the functions including: controlling the heating time, controlling the charge of the battery 12, controlling the temperature inside the pocket 7. The motherboard 11 is then operationally connected to at least one timer 15 and/or to at least one temperature detector.

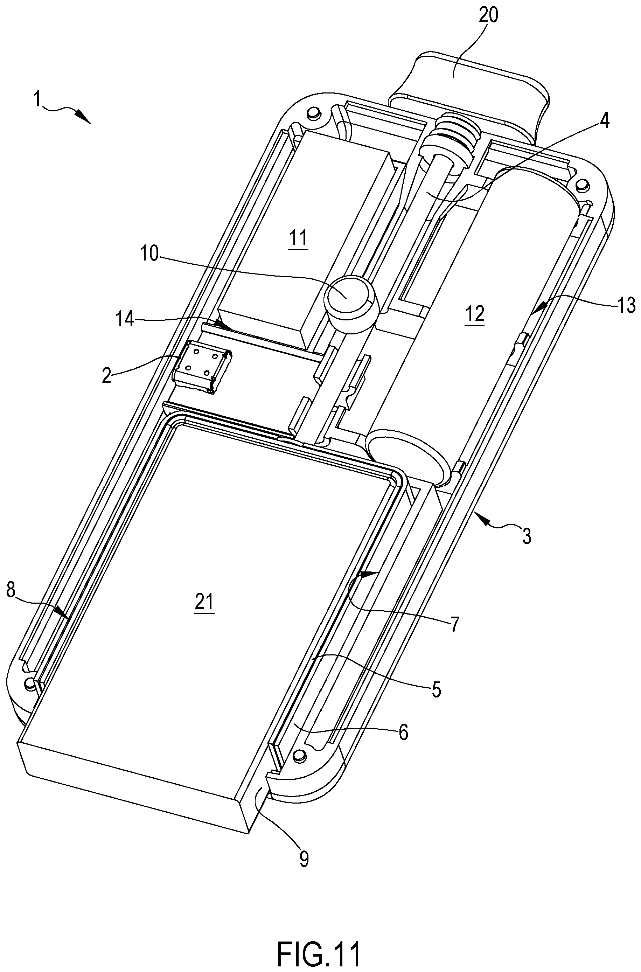

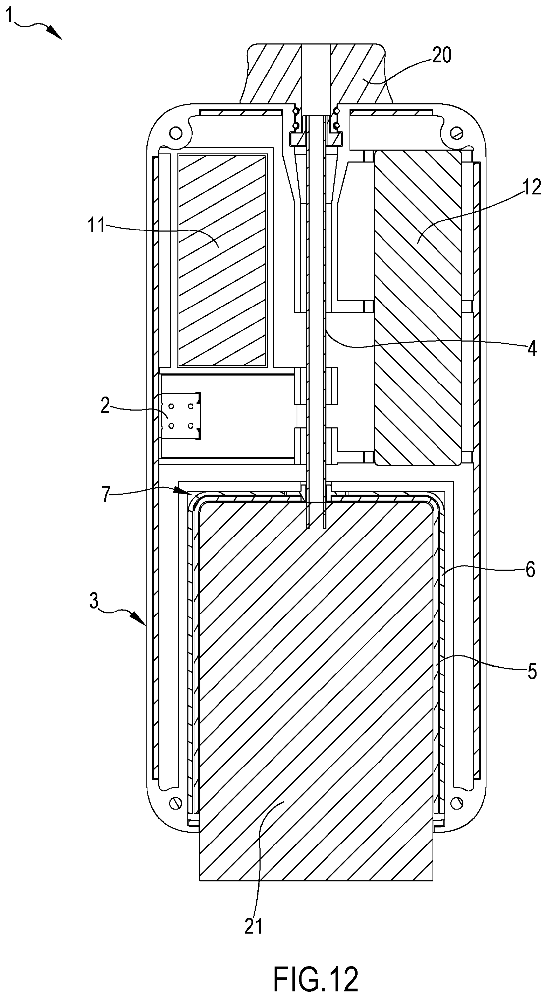

In the second embodiment shown in Figures 11 and 12, the shell 3 internally defines at least a first seat 13 for housing the battery 12 and at least a second seat 14 for housing the motherboard 11, wherein the first seat 13 and the second seat 14 are arranged from mutually opposite sides with respect to the tube 4.

More specifically, the first seat 13 and the second seat 14 are placed between the spout 20 and the pocket 7, thus allowing for the optimization of the spaces within the shell 3.

More particularly, the device 1 may comprise reading means (not visible in detail in the figures) of an identification code, e.g., a bar code, a QR code or a RFID, shown on the capsule 21, where such reading means are operationally connected to the motherboard, the latter being programmed to associate a predefined temperature and/or a predefined heating time with a corresponding identification code.

The motherboard 11 may, in addition, be configured to perform a progressive count of the capsules inserted within the pocket 7.

Appropriately, the battery 12 is of the rechargeable type.

More specifically, the device 1 comprises at least one input 2 for the electrical power supply of the battery 12.

Advantageously, the power button 10 comprises one or more LEDs which indicate according to their respective color, the state of charge of the battery 12 with a first click and subsequently the start of heating with a second click.

The device 1 may, in addition, be provided with a display for the graphical representation of the information processed by the motherboard 11 (temperature, heating time, capsule type, charge level of the battery 12 etc....). Appropriately, the display may be of the touch screen type.

The present invention also relates to a kit comprising the device 1 described above and at least one capsule 21 containing a liquid for consumption, wherein such capsule 21 comprises at least one layer made of flexible, food-grade material. Such a layer, deforming as a result of the vacuum caused by the intake exerted through the tube 4, allows the liquid product contained therein to flow out.

In a first embodiment not shown in detail in the figures, the capsule 21 comprises a single layer made of flexible, food-grade material, where such single layer is of a thermally conductive type and is closed peripherally to define an inner volume. Appropriately, the capsule 21 according to this first embodiment also comprises one or more stiffening elements housed in the inner volume and giving structural rigidity to the capsule itself.

In a second embodiment, the capsule 21 comprises two layers 22,23 of which an outer layer 22 made of thermally conductive material and an inner layer 23 made of flexible, food-grade material.

For example, the outer layer 22 is made of aluminum and the inner layer 23 is made of food-grade non-woven fabric. Appropriately, in this second embodiment, the outer layer 22 is of the rigid type.

The capsule 21 according to the invention, i.e., in both the first and second embodiment, allows the transfer of heat from the heating mechanism 8 to the liquid to be consumed by means of the thermally conductive layer (which corresponds to the only layer of the first embodiment and to the outer layer 22 of the second embodiment) and, at the same time, enables the creation of a vacuum within it thanks to the flexibility of the flexible layer (which corresponds to the only layer of the first embodiment and to the inner layer 23 of the second embodiment) as a result of the intake exerted by a user via the tube 4.

Advantageously, the capsule 21 is hermetically sealed and comprises a single closed hole 24 which can be opened as a result of the interaction with the tube 4 following the introduction of the capsule into the pocket 7.

The capsule 21 is, therefore, devoid of valves for the flow of air since the outflow of the liquid solely occurs as a result of the vacuum applied to its interior as a result of the intake exerted by the user via the tube 4.

It has in practice been ascertained that the described invention achieves the intended objects, and in particular, the device according to the invention enables easy and convenient consumption of a hot beverage in any situation.

In particular, the construction of an externally open pocket for the capsule insertion and the placement of a beverage outlet arranged on the opposite side allow the device according to the invention to be used even with just one hand. In addition, the device and the capsule according to the present invention turn out to be easy to make and do not require the use of valves since the beverage outflow occurs solely as a result of the vacuum generated within the capsule by means of the intake exerted by the user.

## Claims

1. A portable device for the consumption of beverages in capsules, **characterized by** the fact that it comprises:
- a shell (3) defining a pocket (7) for containing a capsule (21) containing a liquid to be dispensed;
- a tube (4) communicating with the outside to allow the flow of the liquid, said tube (4) being adapted to pierce the capsule upon its insertion into said pocket (7);
- a heating mechanism (8) for the capsule (21) contained in said pocket (7);
- a battery (12) for powering at least said heating mechanism (8);
- a power button (10) operable for activating said heating mechanism (8) by means of said battery (12).

2. Device (1) according to claim 1, **characterized by** the fact that said heating mechanism (8) comprises a coil externally coated with an insulating material and distributed on the surface of said pocket (7) containing the capsule (21) to be heated.

3. Device (1) according to claim 1 or 2, **characterized by** the fact that it comprises at least one motherboard (11) operationally connected to said battery (12) and configured to perform at least one of the functions including: controlling the heating time, controlling the charge of said battery (12), controlling the temperature inside said pocket (7).

4. Device (1) according to one or more of the preceding claims, **characterized by** the fact that said battery (12) is of the rechargeable type.

5. Device (1) according to one or more of the preceding claims, **characterized by** the fact that said pocket (7) has one opening (9) for the insertion of said capsule (21), where said opening (9) is accessible from the outside and devoid of closure elements.

6. Device (1) according to one or more of the preceding claims, **characterized by** the fact that it comprises a spout (20) connected to said tube (4).

7. Device (1) according to claim 7, **characterized by** the fact that said spout (20) is arranged on opposite side of the inlet of said capsule (21) within said pocket (7).

8. Device (1) according to one or more of the preceding claims, **characterized by** the fact that said spout (20) is associated with said shell (3) in a removable manner (3).

9. Device (1) according to one or more of the preceding claims, **characterized by** the fact that said shell (3) is conformed substantially to a parallelepiped shape and has two major sides (3a) and two minor sides (3b), and by the fact that said pocket (7) is defined at one of said minor sides (3b) and said spout (20) is associated with the other of said minor sides (3b).

10. Device (1) according to one or more of the preceding claims, **characterized by** the fact that said tube (4) is placed between said pocket (7) and said spout (20) and has a straight development.

11. Device (1) according to one or more of the preceding claims, **characterized by** the fact that said shell (3) is internally hollow and defines, within it, at least a first seat (13) for housing said battery (12) and at least a second seat (14) for housing said motherboard (11), wherein said first seat (13) and said second seat (14) are arranged from mutually opposite sides with respect to said tube (4) and are placed between said spout (20) and said pocket (7).

12. Kit comprising a portable device (1) for the consumption of beverages in capsules according to one or more of the preceding claims and at least one capsule (21) containing a liquid and provided with at least one layer made of flexible, food-grade material.

13. Kit according to claim 12, **characterized by** the fact that said capsule (21) comprises a single layer made of said flexible, food-grade material, where said single layer is of a thermally conductive type and is closed peripherally to define an inner volume, and by the fact that it comprises one or more stiffening elements housed in said inner volume.

14. Kit according to claim 12, **characterized by** the fact that said capsule (21) comprises two layers (22, 23) of which an outer layer (22) of the rigid type, made of thermally conductive material and an inner layer (23) made of said flexible, food-grade material.

15. Kit according to one or more of claims 12 to 14, **characterized by** the fact that said capsule (21) is hermetically sealed and comprises a single closed hole (24) which can be opened as a result of the interaction with said tube (4) following the introduction of the capsule itself into said pocket (7), said capsule being devoid of valves for the flow of air.
